# EUROPÄISCHE PATENTSCHRIFT

(11) **EP 2 880 979 B1**
(45) Veröffentlichungstag und Bekanntmachung des Hinweises auf die Patenterteilung: **05.10.2016**
(21) Anmeldenummer: 14003952.0
(22) Anmeldetag: 24.11.2014
(51) Int. Cl.: A21D 8/02, A21D 10/00, A21D 13/00, A21D 2/26

(54) **Verfahren und Backmischung zur Herstellung von Trockenflachbrot**
Method and baking mixture for the preparation of dry flat bread
Procédé et mélange à contre-courant pour la fabrication de pain pita

(30) Priorität: 04.12.2013 DE 102013018142
(43) Veröffentlichungstag der Anmeldung: 10.06.2015
(73) Patentinhaber: umCereal GmbH, 77955 Ettenheim (DE)
(72) Erfinder: Müller, Ulrich, 77955 Ettenheim (DE)
(74) Vertreter: Börjes-Pestalozza, Henrich

(56) Entgegenhaltungen:
- DE-A1- 2 356 273
- DE-U1-202011 107 231
- US-A- 332 018
- US-A- 3 057 730
- DATABASE GNPD [Online] MINTEL; Dezember 2010 (2010-12), Anonymous: "Original South Tyrolean Crispy Rye Bread", XP002738208, Database accession no. 1445703
- DATABASE GNPD [Online] MINTEL; 5. Februar 2001 (2001-02-05), Anonymous: "Crispy Rye Bread", XP002738209, Database accession no. 2015863
- DATABASE GNPD [Online] MINTEL; 4. Februar 2013 (2013-02-04), Anonymous: "Garlic Khakra", XP002738210, Database accession no. 2046326
- DATABASE WPI Week 197923 Thomson Scientific, London, GB; AN 1979-43474B XP002738211, & SU 618 082 A1 (UKR VENDING EQUIP) 24. Juni 1978 (1978-06-24)
- DATABASE GNPD [Online] MINTEL; November 2012 (2012-11), Anonymous: "Organic Crispbread Mix", XP002738212, Database accession no. 1924217

## Beschreibung

Die Erfindung betrifft ein Verfahren zum Herstellen von Trockenflachbrot, gemäß Anspruch 1 wobei eine Backmischung zumindest aus Trockeneiweiß und wenigstens einem Getreideerzeugnis oder mehreren Getreideerzeugnissen hergestellt, gemischt und unter Zufuhr von Hitze gebacken wird, und weitere darauf beruhende Erfindungsgegenstände gemäß Anspruch 13.

Verfahren zur Herstellung von Trockenflachbrot aus Backmischungen sind bekannt. Dabei werden die einzelnen vorwiegend trockenen Bestandteile zunächst mit Flüssigkeit, wie z.B. Wasser oder Milch vermischt und mittels Kneten zu einem homogenen Teig verarbeitet. Anschließend wird der Teig auf eine gewünschte Stärke ausgerollt oder ausgepresst und geformt. Schließlich wird der Teig gebacken.

Derartige Verfahren zur Herstellung sind aufwändig und vor allem bei der Erzeugung von Trockenflachbroten im Haushalt schwer zu bewältigen, da vor allem das Kneten mühsam und zeitaufwändig sein kann und es in der Regel unbeliebt ist.

Aus US 3 057 730 A ist bereits ein Verfahren zur Herstellung von Backwaren bekannt, wobei die zur Herstellung verwendeten Zutaten keiner Knetung bedürfen. Mittels des darin beschriebenen Verfahrens kann jedoch nur ein mäßiges Backergebnis erzielt werden, da ein Trockenflachbrot, welches mittels dieses Verfahrens hergestellt wurde, eine inhomogene Backstruktur aufweist und beispielsweise beim Verpacken oder beim Transport leicht zerkrümelt. Darüber hinaus ist die Oberflächenstruktur eines mit diesem Verfahren hergestellten Trockenflachbrotes weniger ansprechend für Kunden.

Aus der DE 23 56 273 A1 ist ein Verfahren zur Hydratisierung und Reifung von Mehl durch Zufügen von Wasser beschrieben. Dieses Verfahren eignet sich allerdings nicht dazu, um eine Backware, geschweige denn ein Trockenflachbrot herstellen zu können.

Es besteht deshalb die Aufgabe, ein verbessertes Verfahren zum Backen von Trockenflachbrot zu schaffen, bei welchem das Kneten des Teiges entfallen kann.

Diese Aufgabe wird durch das anspruchsgemäße Verfahren gemäß Anspruch 1 gelöst. Bevorzugte Ausführungsformen sind den abhängigen Ansprüchen zu entnehmen. Die Ansprüche werden hier durch Bezugnahme in die Beschreibung aufgenommen.

Zur Lösung dieser Aufgabe ist demgemäß vorgesehen, dass ein Backblech oder eine Backunterlage, gegebenenfalls nach Belegen mit Backpapier, mit Wasser angefeuchtet oder eingesprüht wird, dass anschließend 1 Gewichtsprozent bis 30 Gewichtsprozent pulverförmiges Trockeneiweiß und 90 Gewichtsprozent bis 5 Gewichtsprozent wenigstens ein trockenes Getreideerzeugnis oder mehrere trockene Getreideerzeugnisse, 0 Gewichtsprozent bis zu 70 Gewichtsprozent Ölsaaten, 0 Gewichtsprozent bis 20 Gewichtsprozent Fette, 0 Gewichtsprozent bis zu 15 Gewichtsprozent Zucker, 0 Gewichtsprozent bis zu 15 Gewichtsprozent Kleie, 0 Gewichtsprozent bis zu 5 Gewichtsprozent Salz, 0 Gewichtsprozent bis zu 5 Gewichtsprozent Hefe oder Hefeextrakt, 0 Gewichtsprozent bis zu 10 Gewichtsprozent Milchprotein, 0 Gewichtsprozent bis zu 10 Gewichtsprozent Farbmalz, 0 Gewichtsprozent bis zu 10 Gewichtsprozent getrockneter Sauerteig oder isolierte Säuren, 0 Gewichtsprozent bis zu 20 Gewichtsprozent Gewürze zur Bildung der Backmischung trocken vermischt und auf die Backunterlage oder auf das Backblech gleichmäßig aufgebracht oder aufgestreut werden, und anschließend an der gesamten Oberfläche mit Wasser angefeuchtet, benetzt und/oder besprüht und anschließend gebacken wird.

Versuche haben gezeigt, dass das Anfeuchten, Benetzen und/oder Besprühen mit Wasser zu einem guten Backergebnis mit einer typischen Gebäckstruktur führt, wobei das Kneten der Mischung vor dem Backen entfällt.

Ein weiterer Vorteil des erfindungsgemäßen Verfahrens besteht darin, dass die hierin verwendete mit Wasser angefeuchtete, benetzte und/oder eingesprühte Mischung vor dem Backen nicht zur gewünschte Teigstärke ausgerollt, ausgepresst und/oder geformt werden muss.

Das erfindungsgemäße Verfahren ersetzt dadurch in Bäckereien den Einsatz entsprechender Maschinen und Geräte, wie zum Beispiel Teigkneter, Mixer, Teigausrollmaschinen oder Teigformer sowie vorwiegend im Haushalt zum Einsatz kommende Rollhölzer und sonstige Hilfsmittel für eine Teigbearbeitung.

Entsprechend einfach und günstig kann Trockenflachbrot im Haushalt sowie in der industriellen Produktion hergestellt werden.

Die Vereinfachung und Reduzierung der nötigen Verfahrensschritte zum erfindungsgemäßen Herstellen von Trockenflachbrot vermindert mögliche Fehlerquellen. Dadurch ist dieses Verfahren besonders gut für das Haushaltsbacken von Trockenflachbroten, Brotcrackern und Knäckebrot geeignet.

Günstig kann es sein, wenn die mit Wasser angefeuchtete Mischung nach einer Einwirkzeit gebacken wird. Eine geeignete Einwirkzeit kann beispielsweise wenigstens 10 Sekunden, insbesondere wenigstens 20 Sekunden, vorzugsweise wenigstens 30 Sekunden. Insbesondere beträgt die Einwirkzeit maximal 60 Sekunden. Dies kann zu einer verbesserten Gebäckstruktur führen.

Des Weiteren kann eine Einwirkzeit zwischen 10 Sekunden und 20 Sekunden, insbesondere zwischen 21 Sekunden und 30 Sekunden, insbesondere zwischen 31 Sekunden und 40 Sekunden, insbesondere zwischen 41 und 50 Sekunden, insbesondere zwischen 51 Sekunden und 60 Sekunden, vorgesehen sein.

Besonders zweckmäßig ist es, wenn die hierin verwendete trockene pulverförmige Backmischung an ihrer gesamten Oberfläche gleichmäßig mit Wasser angefeuchtet, benetzt und/oder eingesprüht wird. Dadurch kann ein homogenes Backergebnis erzielt werden. Es kann zweckmäßig sein, wenn zwischen 25 Gewichtsprozent und 40 Gewichtsprozent, insbesondere zwischen 32 Gewichtsprozent und 39 Gewichtsprozent, vorzugsweise 34 Gewichtsprozent, vorzugsweise 35 Gewichtsprozent, vorzugsweise 36 Gewichtsprozent, vorzugsweise 37 Gewichtsprozent, vorzugsweise 38 Gewichtsprozent, vorzugsweise 39 Gewichtsprozent des Gesamtgewichts der mit Wasser angefeuchteten Backmischung aus Wasser und der Rest aus trockener Backmischung besteht.

Gemäß des erfindungsgemäßen Verfahrens wird das Backblech oder die Backunterlage, gegebenenfalls nach Belegen mit Backpapier oder dergleichen, mit Wasser angefeuchtet, benetzt und/oder besprüht und danach die hierin verwendete Backmischung gleichmäßig darauf verteilt und anschließend an der gesamten Oberfläche mit Wasser angefeuchtet, benetzt und/oder besprüht werden. Durch das Befeuchten des Backblechs oder der Backunterlage vor Auftragen der Backmischung kann sich die Gebäckstruktur je nach Zusammensetzung der Backmischung verbessern, da dann die Backmischung beidseitig auf Oberseite und Unterseite mit Wasser angefeuchtet wird und sie sich somit besser mit dem Wasser verbinden kann.

Dabei kann es besonders vorteilhaft sein, wenn das Backblech oder die Backunterlage vor Auftragen der trockenen Backmischung mit einem Anteil Wasser zwischen 10% und 75%, insbesondere zwischen 15% und 50%, insbesondere zwischen 20% und 40%, insbesondere zwischen 25% und 35%, insbesondere zwischen 29% und 33% der Gesamtmenge an Wasser der angefeuchteten Backmischung angefeuchtet wird, anschließend die trockene Backmischung auf das angefeuchtete Backbleck oder die angefeuchtete Backunterlage aufgetragen wird und darin der Rest der Gesamtmenge an Wasser der angefeuchteten Backmischung auf die auf das angefeuchtete Backblech oder auf die angefeuchtete Backunterlage aufgetragene Backmischung gleichmäßig verteilt wird.

Vorzugsweise wird vor Auftragen der trockenen Backmischung das Backblech oder die Backunterlage, welche/s vorzugsweise mit Backpapier oder dergleichen belegt wurde, mit einer Menge Wasser von 10 Gewichtsprozent bis 15 Gewichtsprozent des Gesamtgewichts besprüht, dann trockene Backmischung mit einem Anteil von 60 bis 75 Gewichtsprozent des Gesamtgewichts aufgetragen und anschließend die aufgetragene Backmischung mit einer Menge Wasser von 15 Gewichtsprozent bis 25 Gewichtsprozent des Gesamtgewichts besprüht. Das Gesamtgewicht bezieht sich auf das Gewicht der Mischung aus Wasser und trockener Backmischung.

Vorzugsweise wird die Backunterlage oder das Backpapier zunächst mit einer kleinen Menge Wasser, beispielsweise mit einem zwanzigstel Liter Wasser, besprüht und danach etwa ein fünftel bis ein viertel Kilogramm, insbesondere ein Zwischenwert davon, beispielsweise 225g der Backmischung aufgebracht, und diese dann mit einer größeren Menge Wasser, beispielsweise mit der doppelten Wassermenge, insbesondere mit einem zehntel Liter Wasser besprüht.

Für die Unterseite wird also eine kleinere Menge Wasser als für die Oberseite der ausgebreiteten Backmischung vorgesehen.

Die mit Wasser angefeuchtete, benetzte und/oder eingesprühte Backmischung aus ursprünglich trockenen pulverförmigen Bestandteilen kann einer Temperatur von 140°C bis 180°C, vorzugsweise 160°C insgesamt für 10 Minuten bis 25 Minuten, vorzugsweise 20 bis 25 Minuten (entspricht Gesamtbackzeit), ausgesetzt und dadurch gebacken werden. Dabei ist denkbar, dass von den angegebenen Temperaturen auch abgewichen werden kann.

Zusätzlich kann die gebackene Mischung nach einem Teil der Gesamtbackzeit auf Stücke in gewünschter Größe geteilt oder geschnitten oder mit Sollbruchstellen versehen und danach weiter gebacken werden. Dadurch werden vorgewählte Formen des Teigbrotes gebildet, ohne es vorher formen zu müssen. Nach einem Teil der Gesamtbackzeit bedeutet, dass die Gesamtbackzeit noch nicht abgeschlossen ist. Es kann beispielsweise vorgesehen sein, die eine Teilzeit gebackene Mischung auf Stücke in gewünschter Größe zu teilen oder zu schneiden, sobald die Oberfläche dunkler geworden ist und/oder eine gewünschte Bräunung erreicht ist. Beispielsweise kann ein Teil der Backzeit zwischen 30 % und 60 %, insbesondere zwischen 40 % und 55 %, insbesondere zwischen 40 % und 50% der Gesamtbackzeit betragen. Anschließend kann die einen Teil der Backzeit gebackene Mischung für den Rest der Gesamtbackzeit weiter gebacken werden.

Zusätzlich kann das Gebäck nach dem regulären Backvorgang im Backofen weiter getrocknet werden, zum Beispiel bis es knusprig ist und/oder die individuell gewünschte Bräunung erreicht ist.

Gemäß des erfindungsgemäßen Verfahrens besteht die hierin verwendete Mischung aus pulverförmigem Trockeneiweiß und mindestens einem trockenen Getreideerzeugnis oder mehreren Getreideerzeugnissen; und Zutaten wie Ölsaaten, wie eine oder mehrere ausgewählt aus der Gruppe bestehend aus Sonnenblumenkernen, Leinsaat, Kürbiskernen, und dergleichen; Fetten; Zucker; Kleie; Salz; Hefeextrakt oder Hefe; Milchprotein; Farbmalz; getrocknetem Sauerteig; isolierten Säuren, die sich zur Herstellung von Lebensmitteln eignen (wie beispielsweise Zitronensäure, Essigsäure, Milchsäure, Fruchtsäuren, Gallussäure, Ascorbinsäure, usw.); Gewürzen; welche insbesondere trocken zugemischt werden.

Vorzugsweise umfasst das pulverförmige Trockeneiweiß Weizengluten, Milchprotein, Hühnereiweiß oder zwei oder mehr davon. Ein wichtiger Faktor bei der Herstellung der Rezeptur ist der Proteingehalt der Mischung, da durch einen ausreichend hohen Proteingehalt der Mischung nach Aufbringen des Wassers auf die Mischung kein Kneten und/oder Formen der Mischung notwendig ist. Dies beruht darauf, dass das Eiweiß in Verbindung mit Hitze und Wasser gerinnt und somit eine typische Gebäckstruktur erzielt wird.

Es kann vorgesehen sein, dass der Backvorgang des erfindungsgemäßen Verfahrens in einem Backofen oder einer Mikrowelle oder einer Kombination davon erfolgt.

Gemäß einer spezifischen Ausführungsform des erfindungsgemäßen Verfahrens enthält die BAckmischung zwischen 1 Gewichtsprozent und 30 Gewichtsprozent, vorzugsweise zwischen 1 Gewichtsprozent und 20 Gewichtsprozent, insbesondere zwischen 7 Gewichtsprozent und 14 Gewichtsprozent Trockeneiweiß und 90 Gewichtsprozent bis 5 Gewichtsprozent mindestens eines Getreideerzeugnisses oder mehrerer Getreideerzeugnisse und weitere Zutaten gemäß Anspruch 1 und Anspruch 13. Gemäß des erfindungsgemäßen Verfahrens werden dem Trockeneiweiß und dem mindestens einem Getreideerzeugnis bis zu 70 Gewichtsprozent Ölsaaten, bis zu 20 Gewichtsprozent Fette, bis zu 15 Gewichtsprozent Zucker, bis zu 15 Gewichtsprozent Kleie, bis zu 5 Gewichtsprozent Salz, bis zu 5 Gewichtsprozent Hefe oder Hefeextrakt, bis zu 10 Gewichtsprozent Milchprotein, bis zu 10 Gewichtsprozent Farbmalz, bis zu 10 Gewichtsprozent getrockneter Sauerteig oder isolierte Säuren, bis zu 20 Gewichtsprozent Gewürze zugemischt werden.

Gemäß einer weiteren spezifischen Ausführungsform des erfindungsgemäßen Verfahrens werden 17 ± 1 Prozent Sonnenblumenkerne, 17 ± 1 Prozent Leinsaat, 16 ± 1 Prozent Kürbiskerne, 10,5 ± 1 Prozent Haferflocken, 10 ± 1 Prozent Weizengluten, 8 ± 1 Prozent Fettpulver, 5 ± 1 Prozent Invertzuckercreme, 5 ± 1 Prozent Weizenkleie, 4 + 1 Prozent Milchprotein, 2 ± 1 Prozent getrockneter Sauerteig, 2 ± 1 Prozent Salz, 1 ± 0,5 Prozent Gerstenmalz und ein halbes ± 0,25 Prozent Hefe oder Hefeextrakt trocken gemischt und nach dem Ausbreiten auf einer Backunterlage mit Wasser besprüht und gebacken.

Schließlich, betrifft die Erfindung eine Verwendung einer Backmischung, beinhaltend 1 Gewichtsprozent bis 30 Gewichtsprozent Trockeneiweiß und 90 Gewichtsprozent bis 5 Gewichtsprozent Getreideerzeugnisse, 0 Gewichtsprozent bis zu 70 Gewichtsprozente Ölsaaten, 0 Gewichtsprozent bis 20 Gewichtsprozent Fette, 0 Gewichtsprozent bis zu 15 Gewichtsprozent Zucker, 0 Gewichtsprozent bis zu 15 Gewichtsprozent Kleie, 0 Gewichtsprozent bis zu 5 Gewichtsprozent Salz, 0 Gewichtsprozent bis zu 5 Gewichtsprozent Hefe oder Hefeextrakt, 0 Gewichtsprozent bis zu 10 Gewichtsprozent Milchprotein, 0 Gewichtsprozent bis zu 10 Gewichtsprozent Farbmalz, 0 Gewichtsprozent bis zu 10 Gewichtsprozent getrockneter Sauerteig oder isolierte Säuren, 0 Gewichtsprozent bis zu 20 Gewichtsprozent Gewürze zur Herstellung eines Trockenflachbrots gemäss einem der Ansprüche 1 bis 12.

Gemäß einer Ausführungsform betrifft die vorliegende Erfindung die erfindungsgemäße Verwendung einer Backmischung, beinhaltend gewichtsbezogen 17 ± 1 Prozent Sonnenblumenkerne, 17 ± 1 Prozent Leinsaat, 16 ± 1 Prozent Kürbiskerne, 10,5 ± 1 Prozent Haferflocken, 10 ± 1 Prozent Weizengluten, 8 ± 1 Prozent Fettpulver, 5 ± 1 Prozent Invertzuckercreme, 5 ± 1 Prozent Weizenkleie, 4 ± 1 Prozent Milchprotein, 2 ± 1 Prozent getrockneter Sauerteig, 2 ± 1 Prozent Salz, 1 ± 0,5 Prozent Gerstenmalz und ein halbes ± 0,25 Prozent Hefe oder Hefeextrakt.

### Definitionen

Der Begriff Getreideerzeugnisse wie hierin verwendet umfasst trockene Produkte wie Mehle, Flocken, Kleie. Allgemein versteht man darunter trockene Erzeugnisse aus gereinigtem Getreide, das nach dem Aussieben zerkleinert, vermahlen, gequetscht, geschrotet, fraktioniert, erhitzt, oder gesiebt wird.

Die Begriffe Mischung und Backmischung wie hierin verwendet sind als Synonyme zu verstehen.

Der Begriff Ölsaaten bedeutet insbesondere eine oder mehrere aus der Gruppe bestehend aus Sonnenblumenkernen, Leinsamen, Kürbiskernen oder dergleichen.

Nachstehend sind mehrere Ausführungsbeispiele der Erfindung anhand der Zeichnungen näher beschrieben. Es zeigt in schematischer Darstellung:
- Fig. 1: das Aufbringen einer Backmischung auf eine als Backblech ausgebildete Backunterlage,
- Fig. 2: das Benetzen der auf der Backunterlage aufgebrachten Backmischung mit Wasser durch Besprühen,

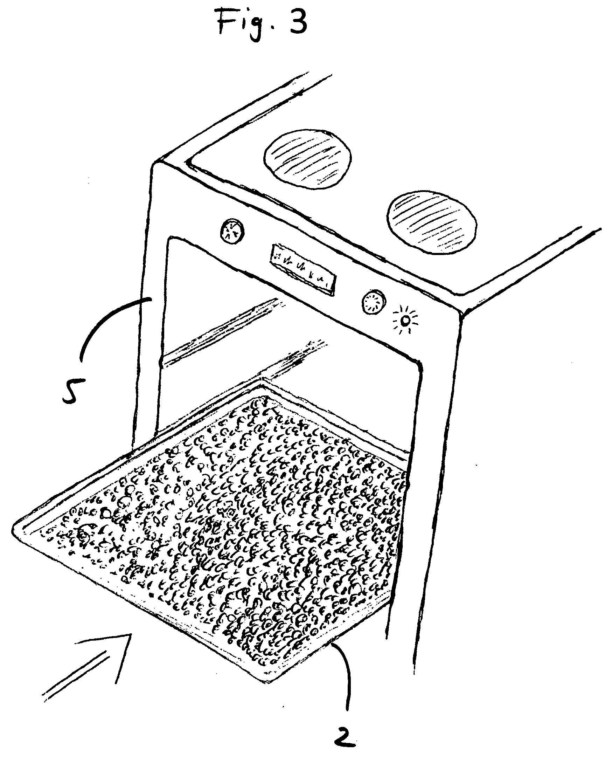

- Fig. 3: die angefeuchtete Backmischung auf der Backunterlage, welche in einen Backofen geschoben wird, und
- Fig. 4: das fertig gebackene Trockenflachbrot bei der Entnahme aus dem Backofen.

### Beispiel 1:

Ein Verfahren zum Herstellen eines Trockenflachbrotes 6 sieht vor, dass eine Backmischung 1 zumindest aus Trockeneiweiß und wenigstens einem Getreideerzeugnis oder mehreren Getreideerzeugnissen hergestellt wird. Weitere Zutaten können zugemischt werden.

Eine beispielhafte Rezeptur ist die folgende:

| | |
|---|---|
| Sonnenblumenkerne¹ | 17 Gewichtsprozent |
| Leinsaat¹ | 17 Gewichtsprozent |
| Kürbiskerne¹ | 16 Gewichtsprozent |
| Haferflocken² | 10, 50 Gewichtsprozent |
| Weizengluten³ | 10 Gewichtsprozent |
| Fettpulver | 8 Gewichtsprozent |
| Invertzuckercreme | 5 Gewichtsprozent |
| Weizenkleie² | 5 Gewichtsprozent |
| Milchprotein³ | 4 Gewichtsprozent |
| Weizenstärke² | 2 Gewichtsprozent |
| Getrockneter Sauerteig | 2 Gewichtsprozent |
| Salz | 2 Gewichtsprozent |
| Gerstenmalz^{2,4} | 1 Gewichtsprozent |
| Hefeextrakt | 0,5 Gewichtsprozent |

| | |
|---|---|
| Klassifikation der verwendeten Zutaten 1: Ölsaat 2: Getreideerzeugnis 3: Trockeneiweiß 4: Farbmalz | |

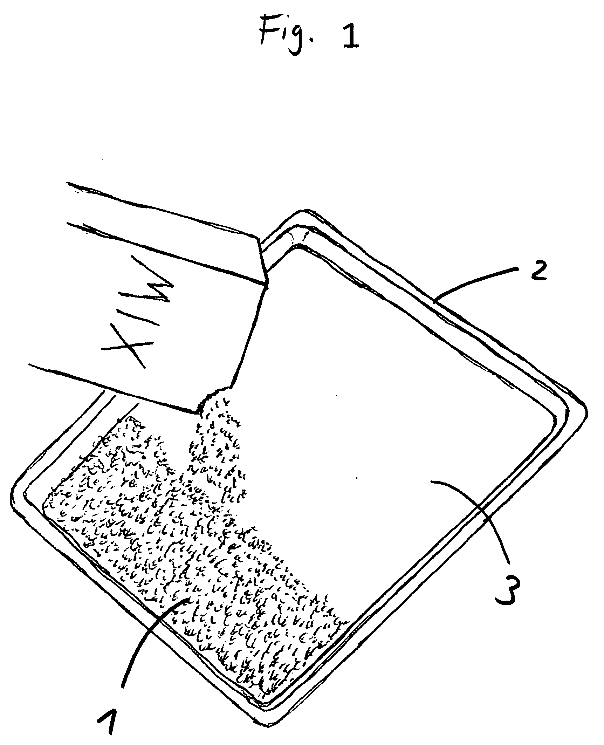

Die Backmischung 1 wird gemäß Fig.1 gleichmäßig auf ein mit Backpapier 3 belegtes Backblech 2 aufgebracht. Das Backblech 2 ist vorzugsweise ein standardisiertes Backblech 2 mit einer Größe von 46 cm x 38 cm, auf welches ca. 225 g einer Backmischung 1 gleichmäßig aufgestreut werden.

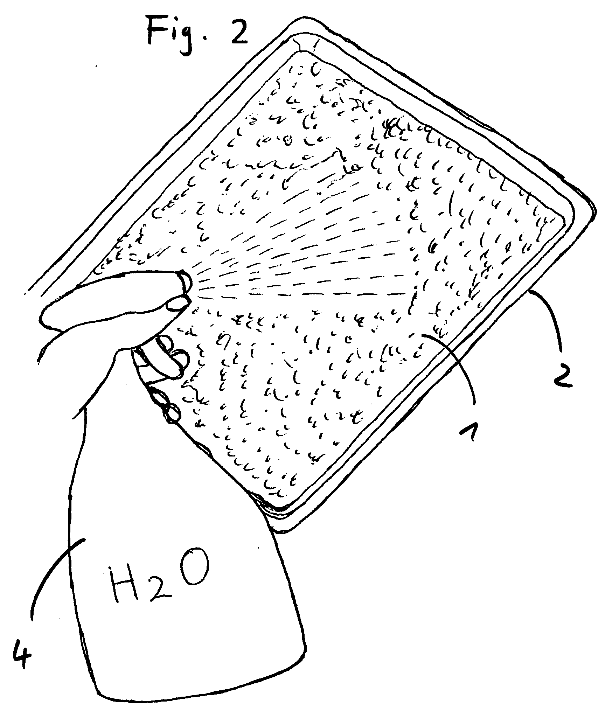

Anschließend wird gemäß Fig.2 diese gleichmäßig auf dem Backblech 2 ausgestreute Backmischung 1 mittels einer handelsüblichen Wassersprühflasche 4 mit Wasser angefeuchtet. Für die hierin zuvor angegebene Menge an Backmischung wird ein ideales Backergebnis beim Auftragen von ca. 150 g Wasser erreicht. Alternativ können auch andere Methoden zum Anfeuchten mit Wasser eingesetzt werden.

Günstig kann es sein, wenn die mit Wasser angefeuchtete Backmischung 1 nach einer Einwirkzeit gebacken wird.

Das Backblech 2 mit der angefeuchteten Backmischung 1 wird dann in einen Backofen 5 geschoben und bei etwa 160°C für etwa 20 Minuten im Backofen 5 gebacken.

Das Backblech 2 wird anschließend aus dem Backofen 5 geholt und das Trockenflachbrot 6 gegebenenfalls in gewünschte Größen geschnitten.

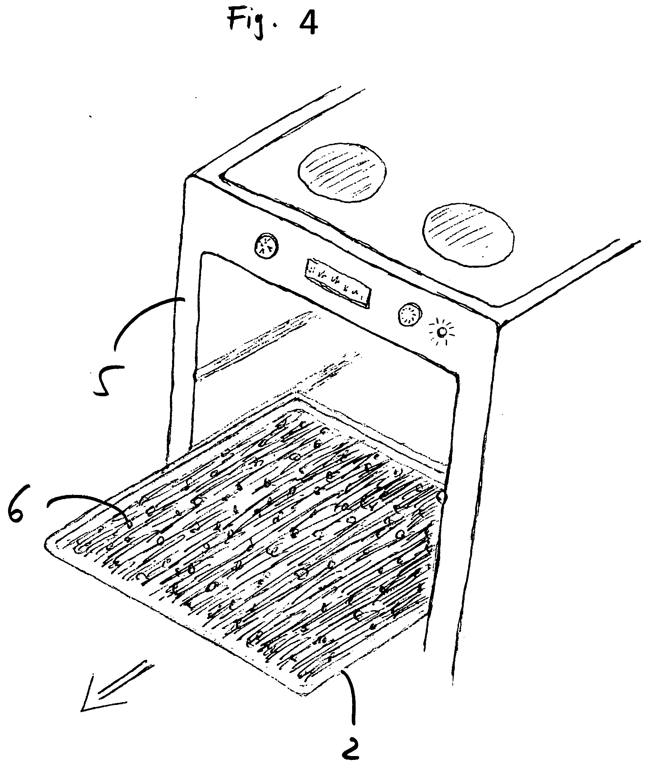

Es ist ebenfalls denkbar, dass gemäß Fig.4 das Backblech 2 nach einer kürzeren Zeit, vorzugsweise nach etwa 10 Minuten, aus dem Backofen 5 genommen wird. Nach diesem Teil der Backzeit kann die gebackene Mischung auf Stücke in gewünschter Größe geteilt oder geschnitten oder mit Sollbruchstellen versehen und danach, vorzugsweise etwa 10 Minuten, weiter gebacken werden. Dadurch werden vorgewählte Formen des Teigbrotes gebildet, ohne es zuvor formen zu müssen.

Bei einem Verfahren zur Herstellung von Trockenflachbrot 6 soll das Kneten von Teig entfallen. Dies wird dadurch erreicht, dass pulverförmiges Trockeneiweiß und wenigstens ein trockenes Getreideerzeugnis oder mehrere trockene Getreideerzeugnisse trocken vermischt und auf eine Bäckunterlage oder auf ein Backblech 2 aufgebracht oder aufgestreut werden, und dass zumindest danach diese trockene pulverförmige Mischung 1 mit Wasser angefeuchtet, benetzt und/oder besprüht und anschließend gebacken wird.

### Beispiel 2:

Auf ein standardisiertes, vorzugsweise mit Backpapier 3 belegtes Backblech 2 mit einer Größe von 40 cm x 30 cm werden gleichmäßig verteilt 40 g Wasser aufgesprüht.

Anschließend werden 225 g einer oder der Backmischung 1 gleichmäßig verteilt, auf das zuvor angefeuchtete Backpapier 3 auf dem Backblech 2 aufgetragen und erneut an der gesamten Oberfläche, gleichmäßig verteilt mit 80 g Wasser besprüht.

Die angefeuchtete Backmischung wird dann mit dem Backblech zusammen in den vorgeheizten Backofen geschoben und bei 160°C mit Umluft für 10 Minuten gebacken.

Nach diesem Teil der Backzeit kann die gebackene Mischung auf Stücke in gewünschter Größe geteilt oder geschnitten oder mit Sollbruchstellen versehen und danach 10 bis 15 Minuten bei 160°C weiter gebacken werden.

Das Trockenflachbrot ist dann verzehrfertig.

### Beispiel 3:

Auf ein standardisiertes, vorzugsweise mit Backpapier 3 belegtes Backblech 2 mit einer Größe von 60 cm x 80 cm werden gleichmäßig verteilt 130 g Wasser aufgesprüht.

Anschließend werden 900 g einer oder der Backmischung 1 gleichmäßig verteilt, auf das zuvor angefeuchtete Backpapier 3 auf dem Backblech 2 aufgetragen und erneut an der gesamten Oberfläche, gleichmäßig verteilt mit 320 g Wasser besprüht. Die angefeuchtete Backmischung wird dann mit dem Backblech zusammen in den vorgeheizten Backofen geschoben und bei 160°C mit Umluft für 10 Minuten gebacken.

Nach diesem Teil der Backzeit kann die gebackene Mischung auf Stücke in gewünschter Größe geteilt oder geschnitten oder mit Sollbruchstellen versehen und danach 15 Minuten bei 160°C mit Umluft weiter gebacken werden.

Das Trockenflachbrot ist dann verzehrfertig.

### Beispiel 4:

Bei einer weiteren Ausgestaltung des erfindungsgemäßen Verfahrens ist vorgesehen, dass eine als flacher Teller ausgebildete Backunterlage mit Backpapier (z.B. Durchmesser ca. 20cm) belegt und gleichmäßig mit einer Menge Wasser von 10 g besprüht wird.

Anschließend werden 50 g einer oder der trockenen Backmischung gleichmäßig verteilt auf das zuvor befeuchtete Backpapier aufgestreut und die aufgestreute Backmischung erneut mit einer Menge Wasser von 20 g besprüht.

Die besprühte Backmischung wird dann vorzugsweise mitsamt dem Teller für etwa 90 Sekunden bei 600W in einer Mikrowelle erhitzt und getrocknet.

Das in der Mikrowelle noch nicht vollständig getrocknete Trockenflachbrot kann danach beispielsweise anhand eines Messers auf die gewünschte Größe zugeschnitten oder gebrochen werden.

Anschließend wird das in Stücke geschnittene (oder das ungeschnittene) Trockenflachbrot für etwa 210 Sekunden bei 600W nochmals getrocknet.

Das Trockenflachbrot ist dann verzehrfertig.

## Patentansprüche

1. Verfahren zum Herstellen von Trockenflachbrot, wobei eine Backmischung zumindest aus Trockeneiweiß und wenigstens einem Getreideerzeugnis oder mehreren Getreideerzeugnissen hergestellt, gemischt und unter Zufuhr von Hitze gebacken wird, **dadurch gekennzeichnet, dass** ein Backblech oder eine Backunterlage, gegebenenfalls nach Belegen mit Backpapier, mit Wasser angefeuchtet oder eingesprüht wird, dass anschließend 1 Gewichtsprozent bis 30 Gewichtsprozent pulverförmiges Trockeneiweiß und 90 Gewichtsprozent bis 5 Gewichtsprozent wenigstens ein trockenes Getreideerzeugnis oder mehrere trockene Getreideerzeugnisse, 0 Gewichtsprozent bis zu 70 Gewichts-prozente Ölsaaten, 0 Gewichtsprozent bis 20 Gewichtsprozent Fette, 0 Gewichtsprozent bis zu 15 Gewichtsprozent Zucker, 0 Gewichtsprozent bis zu 15 Gewichtsprozent Kleie, 0 Gewichtsprozent bis zu 5 Gewichtsprozent Salz, 0 Gewichtsprozent bis zu 5 Gewichtsprozent Hefe oder Hefeextrakt, 0 Gewichtsprozent bis zu 10 Gewichtsprozent Milchprotein, 0 Gewichtsprozent bis zu 10 Gewichtsprozent Farbmalz, 0 Gewichtsprozent bis zu 10 Gewichtsprozent getrockneter Sauerteig oder isolierte Säuren, 0 Gewichtsprozent bis zu 20 Gewichtsprozent Gewürze zur Bildung der Backmischung trocken vermischt und auf die Backunterlage oder auf das Backblech gleichmäßig aufgebracht oder aufgestreut werden, und anschließend an der gesamten Oberfläche mit Wasser angefeuchtet, benetzt und/oder besprüht und anschließend gebacken wird.

2. Verfahren nach Anspruch 1, **dadurch gekennzeichnet, dass** die mit Wasser angefeuchtete, benetzte und/oder besprühte Mischung nach einer Einwirkzeit gebacken wird.

3. Verfahren nach Anspruch 1 oder 2, **dadurch gekennzeichnet, dass** die trockene pulverförmige Backmischung an ihrer gesamten Oberfläche gleichmäßig mit Wasser angefeuchtet, benetzt und/oder eingesprüht wird.

4. Verfahren nach einem der vorstehenden Ansprüche, **dadurch gekennzeichnet, dass** die mit Wasser angefeuchtete oder eingesprühte Mischung nicht geknetet und nicht auf die gewünschte Teigstärke ausgerollt, ausgepresst und/oder geformt werden muss.

5. Verfahren nach einem der vorstehenden Ansprüche, **dadurch gekennzeichnet, dass** die mit Wasser angefeuchtete oder eingesprühte Mischung aus ursprünglich trockenen, pulverförmigen Bestandteilen einer Temperatur von 140°C bis 180°C, vorzugsweise 160°C insgesamt für 10 Minuten bis 25 Minuten, vorzugsweise 20 bis 25 Minuten, ausgesetzt und dadurch gebacken wird.

6. Verfahren nach einem der vorstehenden Ansprüche, **dadurch gekennzeichnet, dass** der pulverförmigen Mischung von Trockeneiweiß und mindestens einem trockenen Getreideerzeugnis oder mehreren trockenen Getreideerzeugnissen, weitere Zutaten zugemischt und die Gesamtmischung gleichmäßig auf einer Backunterlage aufgebracht und mit Wasser angefeuchtet oder besprüht und danach gebacken wird.

7. Verfahren nach einem der vorstehenden Ansprüche, **dadurch gekennzeichnet, dass** der Mischung aus pulverförmigem Trockeneiweiß und mindestens einem trockenen Getreideerzeugnis oder mehreren Getreideerzeugnissen; und optional ein oder mehreren Zutaten wie Ölsaaten, wie eine oder mehrere ausgewählt aus der Gruppe bestehend aus Sonnenblumenkernen, Leinsaat, Kürbiskernen, und dergleichen; Fetten; Zucker; Kleie; Salz; Hefeextrakt oder Hefe; Milchprotein; Farbmalz; getrocknetem Sauerteig; isolierten Säuren, Gewürze, oder zwei oder mehr der genannten Zutaten zugemischt und danach diese Gesamtmischung mit Wasser angefeuchtet oder besprüht und gebacken wird.

8. Verfahren nach einem der vorstehenden Ansprüche, wobei das pulverförmige Trockeneiweiß Weizengluten, Milchprotein, Hühnereiweiß oder zwei oder mehr davon umfasst.

9. Verfahren nach einem der vorstehenden Ansprüche, **dadurch gekennzeichnet, dass** dem Trockeneiweiß und dem wenigstens einen Getreideerzeugnis mindestens eine oder zwei oder mehr der folgenden Zutaten ausgewählt aus der Gruppe bestehend aus bis zu 70 Gewichtsprozente Ölsaaten, bis zu 20 Gewichtsprozent Fette, bis zu 15 Gewichtsprozent Zucker, bis zu 15 Gewichtsprozent Kleie, bis zu 5 Gewichtsprozent Salz, bis zu 5 Gewichtsprozent Hefe oder Hefeextrakt, bis zu 10 Gewichtsprozent Milchprotein, bis zu 10 Gewichtsprozent Farbmalz, bis zu 10 Gewichtsprozent getrockneter Sauerteig oder isolierte Säuren, bis zu 20 Gewichtsprozent Gewürze zugemischt werden.

10. Verfahren nach einem der vorstehenden Ansprüche, **dadurch gekennzeichnet, dass** 17 ± 1 Prozent Sonnenblumenkerne, 17 ± 1 Prozent Leinsaat, 16 ± 1 Prozent Kürbiskerne, 10,5 ± 1 Prozent Haferflocken, 10 ± 1 Prozent Weizengluten, 8 ± 1 Prozent Fettpulver, 5 ± 1 Prozent Invertzuckercreme, 5 ± 1 Prozent Weizenkleie, 4 ± 1 Prozent Milchprotein, 2 ± 1 Prozent getrockneter Sauerteig, 2 ± 1 Prozent Salz, 1 ± 0,5 Prozent Gerstenmalz und ein halbes ± 0,25 Prozent Hefe oder Hefeextrakt trocken gemischt und nach dem Ausbreiten auf einer Backunterlage mit Wasser angefeuchtet oder besprüht und gebacken werden.

11. Verfahren nach einem der vorstehenden Ansprüche, **dadurch gekennzeichnet, dass** das Trockenflachbrot nach dem Backvorgang im Backofen getrocknet wird.

12. Verfahren nach einem der vorstehenden Ansprüche, **dadurch gekennzeichnet, dass** die gebackene Mischung nach einem Teil der Backzeit auf Stücke in gewünschter Größe geteilt oder geschnitten oder mit Sollbruchstellen versehen und danach weiter gebacken wird.

13. Verwendung einer Backmischung, beinhaltend 1 Gewichtsprozent bis 30 Gewichtsprozent Trockeneiweiß und 90 Gewichtsprozent bis 5 Gewichtsprozent Getreideerzeugnisse, 0 Gewichtsprozent bis zu 70 Gewichts-prozente Ölsaaten, 0 Gewichtsprozent bis 20 Gewichtsprozent Fette, 0 Gewichtsprozent bis zu 15 Gewichtsprozent Zucker, 0 Gewichtsprozent bis zu 15 Gewichtsprozent Kleie, 0 Gewichtsprozent bis zu 5 Gewichtsprozent Salz, 0 Gewichtsprozent bis zu 5 Gewichtsprozent Hefe oder Hefeextrakt, 0 Gewichtsprozent bis zu 10 Gewichtsprozent Milchprotein, 0 Gewichtsprozent bis zu 10 Gewichtsprozent Farbmalz, 0 Gewichtsprozent bis zu 10 Gewichtsprozent getrockneter Sauerteig oder isolierte Säuren, 0 Gewichtsprozent bis zu 20 Gewichtsprozent Gewürze zur Herstellung eines Trockenflachbrots nach dem Verfahren gemäß einem der Ansprüche 1 bis 12.

## Claims

1. Method for producing dry flatbread, wherein a baking mixture is produced consisting at least of dried egg white and at least one cereal product or a plurality of cereal products, the mixture is mixed and is baked by supplying heat, **characterised in that** a baking tray or baking sheet, optionally having baking paper laid thereon, is wetted or sprayed with water, **in that** then 1 weight percent to 30 weight percent of powdered dried egg white and 90 weight percent to 5 weight percent of at least one dry cereal product or a plurality of dry cereal products, 0 weight percent to 70 weight percent of oilseed, 0 weight percent to 20 weight percent of fat, 0 weight percent to 15 weight percent of sugar, 0 weight percent to 15 weight percent of bran, 0 weight percent to 5 weight percent of salt, 0 weight percent to 5 weight percent of yeast or yeast extract, 0 weight percent to 10 weight percent of milk protein, 0 weight percent to 10 weight percent of colour malt, 0 weight percent to 10 weight percent of dried sourdough or isolated acids, 0 weight percent to 20 weight percent of spices are mixed in the dry state to form the baking mixture and are applied or scattered uniformly on the baking sheet or baking tray, and then wetted, sprinkled or sprayed with water over the entire surface and then baked.

2. Method as claimed in claim 1, **characterised in that** the mixture wetted, sprinkled or sprayed with water is baked after a dwell time.

3. Method as claimed in claim 1 or 2, **characterised in that** the dry powdered baking mixture is wetted, sprinkled and/or sprayed with water uniformly over its entire surface.

4. Method as claimed in any one of the preceding claims, **characterised in that** the mixture wetted or sprayed with water does not have to be kneaded and does not have to be rolled, pressed and/or shaped to the desired dough thickness.

5. Method as claimed in any one of the preceding claims, **characterised in that** the mixture wetted or sprayed with water and consisting of originally dry powdered components is subjected to a temperature of 140°C to 180°C, preferably 160°C for a total of 10 minutes to 25 minutes, preferably 20 to 25 minutes and is thereby baked.

6. Method as claimed in any one of the preceding claims, **characterised in that** the powdered mixture of dried egg white and at least one dry cereal product or a plurality of dry cereal products has further ingredients admixed therewith and the total mixture is applied uniformly on a baking sheet and is wetted or sprayed with water and then baked.

7. Method as claimed in any one of the preceding claims, **characterised in that** the mixture consisting of powdered dried egg white and at least one dry cereal product or a plurality of cereal products optionally has one or more ingredients such as oilseed such as one or more selected from the group consisting of sunflower seeds, linseed, pumpkin seeds and the like; fats; sugar; bran; salt; yeast extract or yeast; milk protein; colour malt; dried sourdough; isolated acids, spices, or two or more of said ingredients admixed therewith, and then this total mixture is wetted or sprayed with water and baked.

8. Method as claimed in any one of the preceding claims, wherein the powdered dried egg white comprises wheat gluten, milk protein, hen's egg white or two or more thereof.

9. Method as claimed in any one of the preceding claims, **characterised in that** the dried egg white and the at least one cereal product has at least one or two or more of the following ingredients selected from the group consisting of up to 70 weight percent of oilseed, up to 20 weight percent of fat, up to 15 weight percent of sugar, up to 15 weight percent of bran, up to 5 weight percent of salt, up to 5 weight percent of yeast or yeast extract, up to 10 weight percent of milk protein, up to 10 weight percent of colour malt, up to 10 weight percent of dried sourdough or isolated acids, up to 20 weight percent of spices admixed therewith.

10. Method as claimed in any one of the preceding claims, **characterised in that** 17 ± 1 percent of sunflower seeds, 17 ± 1 percent of linseed, 16 ± 1 percent of pumpkin seeds, 10.5 ± 1 percent of oat flakes, 10 ± 1 percent of wheat gluten, 8 ± 1 percent of fat powder, 5 ± 1 percent of invert sugar cream, 5 ± 1 percent of wheat bran, 4 ± 1 percent of milk protein, 2 ± 1 percent of dried sourdough, 2 ± 1 percent of salt, 1 ± 0.5 percent of barley malt and 0.5 ± 0.25 percent of yeast or yeast extract are mixed in the dry state and after spreading on a baking sheet are wetted or sprayed with water and baked.

11. Method as claimed in any one of the preceding claims, **characterised in that** the dry flatbread is dried after the baking process in the baking oven.

12. Method as claimed in any one of the preceding claims, **characterised in that** the baked mixture, after some of the baking time, is divided or cut into pieces of the desired size or is provided with predetermined breaking points and is then baked further.

13. Use of a baking mixture containing 1 weight percent to 30 weight percent of dried egg white and 90 weight percent to 5 weight percent of a cereal product, 0 weight percent to 70 weight percent of oilseed, 0 weight percent to 20 weight percent of fat, 0 weight percent to 15 weight percent of sugar, 0 weight percent to 15 weight percent of bran, 0 weight percent to 5 weight percent of salt, 0 weight percent to 5 weight percent of yeast or yeast extract, 0 weight percent to 10 weight percent of milk protein, 0 weight percent to 10 weight percent of colour malt, 0 weight percent to 10 weight percent of dried sourdough or isolated acids, 0 weight percent to 20 weight percent of spices for producing a dry flatbread in accordance with the method as claimed in any one of claims 1 to 12.

## Revendications

1. Procédé de fabrication de pain pita, dans lequel on fabrique un mélange de cuisson au moins à partir de blanc d'oeuf en poudre et d'au moins un produit céréalier ou de plusieurs produits céréaliers, on le mélange et on le cuit par apport de chaleur, **caractérisé en ce que** l'on humidifie ou on asperge avec de l'eau une plaque de cuisson ou un support de cuisson, éventuellement après avoir placé un papier de cuisson, on mélange ensuite à sec 1 pour cent en poids à 30 pour cent en poids de blanc d'oeuf sec en poudre et 90 pour cent en poids à 5 pour cent en poids d'au moins un produit céréalier sec ou de plusieurs produits céréaliers secs, 0 pour cent en poids à 70 pour cent en poids de graines oléagineuses, 0 pour cent en poids à 20 pour cent en poids de graisses, 0 pour cent en poids à 15 pour cent en poids de sucre, 0 pour cent en poids à 15 pour cent en poids de son, 0 pour cent en poids à 5 pour cent en poids de sel, 0 pour cent en poids à 5 pour cent en poids de levure ou d'extrait de levure, 0 pour cent en poids à 10 pour cent en poids de protéines de lait, 0 pour cent en poids à 10 pour cent en poids de malt torréfié, 0 pour cent en poids à 10 pour cent en poids de levain séché ou d'acides isolés, 0 pour cent en poids à 20 pour cent en poids d'épices mélangé à sec pour la formation du mélange de cuisson et on le dépose ou on l'étale uniformément sur le support de cuisson ou sur la plaque de cuisson, on l'humidifie, on le mouille et/ou on l'asperge avec de l'eau, puis on le cuit.

2. Procédé selon la revendication 1, **caractérisé en ce que** l'on cuit le mélange humidifié, mouillé et/ou aspergé avec de l'eau après un certain temps d'action.

3. Procédé selon la revendication 1 ou 2, **caractérisé en ce que** l'on humidifie, on mouille et/ou on asperge le mélange de cuisson sec en poudre uniformément avec de l'eau sur toute sa surface.

4. Procédé selon l'une quelconque des revendications précédentes, **caractérisé en ce que** le mélange humidifié ou aspergé avec de l'eau ne doit pas être pétri et ne doit pas être roulé, pressé et/ou moulé à la consistance de pâte désirée.

5. Procédé selon l'une quelconque des revendications précédentes, **caractérisé en ce que** le mélange humidifié ou aspergé avec de l'eau, constitué de composants en poudre initialement secs, est soumis à une température de 140°C à 180°C, de préférence 160°C au total pendant 10 à 25 minutes, de préférence 20 à 25 minutes, et est de ce fait cuit.

6. Procédé selon l'une quelconque des revendications précédentes, **caractérisé en ce que** l'on ajoute d'autres ingrédients au mélange pulvérulent de blanc d'oeuf en poudre et d'au moins un produit céréalier sec ou de plusieurs produits céréaliers secs et le mélange total est déposé uniformément sur un support de cuisson, puis humidifié ou aspergé avec de l'eau et ensuite cuit.

7. Procédé selon l'une quelconque des revendications précédentes, **caractérisé en ce que** l'on ajoute au mélange de blanc d'oeuf en poudre et d'au moins un produit céréalier sec ou de plusieurs produits céréaliers ; et, facultativement, un ou plusieurs ingrédients comme des graines oléagineuses, comme une ou plusieurs choisies dans le groupe composé de graines de tournesol, graines de lin, graines de courge, et analogues ; graisses ; sucre ; son ; sel ; extrait de levure ou levure ; protéines de lait ; malt torréfié ; levain séché ; acides isolés, épices, ou deux ou plusieurs des ingrédients cités, puis on humidifie ou on asperge ce mélange total avec de l'eau et on le cuit.

8. Procédé selon l'une quelconque des revendications précédentes, **caractérisé en ce que** le blanc d'oeuf en poudre contient du gluten de froment, des protéines de lait, du blanc d'oeuf de poule ou deux ou plusieurs de ceux-là.

9. Procédé selon l'une quelconque des revendications précédentes, **caractérisé en ce que** l'on ajoute au blanc d'oeuf en poudre et audit au moins un produit céréalier au moins un, deux ou plusieurs des ingrédients suivants, choisis dans le groupe composé de jusqu'à 70 pour cent en poids de graines oléagineuses, jusqu'à 20 pour cent en poids de graisses, jusqu'à 15 pour cent en poids de sucre, jusqu'à 15 pourcent en poids de son, jusqu'à 5 pour cent en poids de sel, jusqu'à 5 pour cent en poids de levure ou d'extrait de levure, jusqu'à 10 pour cent en poids de protéines de lait, jusqu'à 10 pour cent en poids de malt torréfié, jusqu'à 10 pour cent en poids de levain séché ou d'acides isolés, jusqu'à 20 pour cent en poids d'épices.

10. Procédé selon l'une quelconque des revendications précédentes, **caractérisé en ce que** l'on mélange à sec 17 ± 1 pour cent de graines de tournesol, 17 ± 1 pour cent de graines de lin, 16 ± 1 pour cent de graines de courge, 10,5 ± 1 pour cent de flocons d'avoine, 10 ± 1 pour cent de gluten de froment, 8 ± 1 pour cent de graisse en poudre, 5 ± 1 pour cent de crème de sucre inverti, 5 ± 1 pour cent de son de froment, 4 ± 1 pour cent de protéines de lait, 2 ± 1 pour cent de levain séché, 2 ± 1 pour cent de sel, 1 ± 0,5 pour cent de malt d'orge et un demi ± 0,25 pour cent de levure ou d'extrait de levure et, après avoir étalé le mélange sur un support de cuisson, on l'humidifie ou on l'asperge avec de l'eau et on le cuit.

11. Procédé selon l'une quelconque des revendications précédentes, **caractérisé en ce que** le pain pita est séché dans le four de cuisson après l'opération de cuisson.

12. Procédé selon l'une quelconque des revendications précédentes, **caractérisé en ce que** le mélange cuit est, après une partie du temps de cuisson, partagé ou découpé en parts de la grandeur désirée ou marqué par des lignes de cassure et est ensuite cuit complètement.

13. Utilisation d'un mélange de cuisson, contenant 1 pour cent en poids à 30 pour cent en poids de blanc d'oeuf en poudre et 90 pour cent en poids à 5 pour cent en poids de produits céréaliers, 0 pour cent en poids à 70 pour cent en poids de graines oléagineuses, 0 pour cent en poids à 20 pour cent en poids de graisses, 0 pour cent en poids à 15 pour cent en poids de sucre, 0 pour cent en poids à 15,pour cent en poids de son, 0 pour cent en poids à 5 pour cent en poids de sel, 0 pour cent en poids à 5 pour cent en poids de levure ou d'extrait de levure, 0 pour cent en poids à 10 pour cent en poids de protéines de lait, 0 pour cent en poids à 10 pour cent en poids de malt torréfié, 0 pour cent en poids à 10 pour cent en poids de levain séché ou d'acides isolés, 0 pour cent en poids à 20 pour cent en poids d'épices pour la fabrication d'un pain pita par le procédé selon l'une quelconque des revendications 1 à 12.
